# EUROPEAN PATENT APPLICATION

(11) **EP 4 752 940 A1**
(43) Date of publication of application: **03.06.2026**
(21) Application number: 25194844.4
(22) Date of filing: 08.08.2025
(51) Int. Cl.: H01M 4/02, H01M 4/13, H01M 4/134, H01M 10/0525, H01M 10/0566, H01M 10/0587

(54) **JELLY ROLL AND BATTERY**

(30) Priority: 29.11.2024 CN 202411732194
(71) Applicant: Zhuhai CosMX Battery Co., Ltd., Zhuhai, Guangdong 519180 (CN)
(72) Inventor: LI, Bin, Zhuhai, Guangdong 519180 (CN); XIE, Yuxin, Zhuhai, Guangdong 519180 (CN); LI, Jiao, Zhuhai, Guangdong 519180 (CN); ZHANG, Baohai, Zhuhai, Guangdong 519180 (CN)
(74) Representative: Murgitroyd & Company

(57) **Abstract**

A jelly roll includes a positive electrode plate, a negative electrode plate and a separator located between the positive electrode plate and the negative electrode plate. The positive electrode plate includes a first surface and a second surface opposite to each other in a first direction, the positive electrode plate is provided with a plurality of protruding portions and straight portions located between the adjacent protruding portions. A maximum distance from a vertex of the protruding portion to a plane where the first surface is located is hl, in the first direction, a thickness of the straight portion on the positive electrode plate is h, and 5% ≤ h1/h ≤ 30%. The negative electrode plate includes a negative electrode active layer with a weight percentage content of a silicon element being W1, and 0.3≤ W1/(h1/h) ≤5.

## Description

### TECHNICAL FIELD

The present application relates to the field of battery technologies, and in particular, to a jelly roll and a battery.

### BACKGROUND

Lithium-ion batteries (LIBs) are widely used in electronic apparatuses due to their high specific energy density, wide temperature range, and long cycle life. Among them, a silicon-based anode material is used as a portion of the negative electrode plate in a jelly roll of some batteries, and the silicon-based anode material is increasingly used in the lithium-ion batteries due to its high lithium intercalation capacity.

However, the silicon-based material faces an issue of volume expansion during charge and discharge processes. During charging and discharging, silicon and lithium undergo an alloying reaction, so that a volume of the silicon expands by 100% to 300%. This repeated contraction and expansion will exacerbate the compression between layers of a battery cell, so that there is insufficient electrolyte solution between the layers, thereby leading to poor infiltration, and thus resulting in rapid capacity degradation of the battery.

### SUMMARY

Embodiments of the present application provide a jelly roll and a battery to solve the technical problem in the above-mentioned related art that poor infiltration caused by insufficient electrolyte solution between layers will lead to rapid capacity degradation of a battery.

To achieve the foregoing purpose, the embodiments of the present application provide following technical solutions.

In a first aspect, the embodiments of the present application provide a jelly roll including a positive electrode plate, a negative electrode plate and a separator located between the positive electrode plate and the negative electrode plate. The positive electrode plate, the separator and the negative electrode plate are wound to form the jelly roll. The positive electrode plate includes a first surface and a second surface opposite to each other in a first direction. The positive electrode plate is provided with a plurality of protruding portions and straight portions located between the adjacent protruding portions, and the protruding portion is formed by a portion of the positive electrode plate protruding from the second surface toward the first surface. A maximum distance from a vertex of the protruding portion to a plane where the first surface is located is h1. In the first direction, a thickness of the straight portion on the positive electrode plate is h, and h and h1 satisfy: 5% ≤h1/h ≤ 30%. The negative electrode plate includes a negative electrode current collector and negative electrode active layers located on two side of the negative electrode current collector in the first direction respectively. The negative electrode active layer includes a silicon-carbon composite material and/or a silicon-oxygen composite material, and a weight percentage content of a silicon element in the negative electrode active layer is W1, and W1, h1, and h satisfy: 0.3 ≤ W1/(h1/h) ≤ 5.

On the basis of the above technical solution, the present application may also include the following improvements.

In a possible implementation, W1 satisfies: 3 wt% ≤ W1 ≤ 50 wt%, and/or, h1 satisfies: 3 µm ≤ h1≤ 50 µm.

In a possible implementation, the positive electrode plate includes a winding head end and a winding tail end opposite to each other in a length direction of the positive electrode plate. The plurality of protruding portions are arranged at intervals in a direction from the winding head end to the winding tail end. A maximum distance from a vertex of the protruding portion disposed close to the winding head end to the plane where the first surface is located is greater than a maximum distance from a vertex of the protruding portion close to the winding tail end to the plane where the first surface is located.

In a possible implementation, the positive electrode plate includes a plurality of curved sections and a plurality of straight sections. In the direction from the winding head end to the winding tail end, the plurality of straight sections and the plurality of curved sections are alternately arranged. Both the plurality of curved sections and the plurality of straight sections are provided with the protruding portions. A maximum distance from an outer surface of the protruding portion on the straight section to the first surface is h11, a maximum distance from an outer surface of the protruding portion on the curved section to the first surface is h12, and h11 and h12 satisfy: h11 < h12.

In a possible embodiment, h11 and h12 satisfy: 0.1 ≤ h11/h12 ≤ 0.9; and/or, h11 satisfies: 3 µm ≤ h11 ≤ 30 µm; and/or, h12 satisfies: 5 µm ≤ h12 ≤ 50 µm.

In a possible implementation, a region on the second surface of the positive electrode plate corresponding to the protruding portion is a concave portion. An outer surface of the protruding portion is a first curved surface, and an inner surface of the concave portion is a second curved surface. A curvature radius of the first curved surface is R1, a curvature radius of the second curved surface is R2, and R1 and R2 satisfy: R1 > R2.

In a possible implementation, in a radial direction of the first curved surface, a distance between the vertex of the protruding portion and a vertex of the concave portion is less than or equal to a thickness h of a straight portion on the positive electrode plate; R1 satisfies: 0.5 mm ≤ R1 ≤ 8 mm; and/or, R2 satisfies: 0.5 mm ≤ R2 ≤ 8 mm; and/or, R1 and R2 satisfy: 1.01 ≤ R1/R2 ≤ 1.1.

In a possible implementation, in the first direction, outer tangent lines of orthographic projections of three the adjacent protruding portions that are not on a same straight line form an external tangent triangle together, and an area of the external tangent triangle is S3. In the first direction, inner tangent lines of orthographic projections of the three adjacent protruding portions that are not on the same straight line form an internal tangent triangle, and an area of the internal tangent triangle is S4. A distance between centers of orthographic projections of two the adjacent protruding portions on a plane where the first surface is located is L1, and S3, S4, R1 and L1 satisfy: 3πR1² ≤ (S3-S4) ≤ 1.3L1².

In a possible implementation, h1 and the curvature radius R1 of the first curved surface satisfy: 0.02 ≤ h1/2R1 ≤ 0.1.

In a possible implementation, in the first direction, a distance between centers of orthographic projections of the two adjacent protruding portions on a plane where the first surface is located is L1, a shortest distance between the two adjacent protruding portions is L2, and L1 and L2 satisfy: 1.05 ≤ L1/L2 ≤3; and/or

L1 satisfies: 3 mm ≤ L1 ≤ 10 mm; and/or L2 satisfies: 0.5 mm ≤ L2 ≤ 8 mm.

In a possible implementation, a surface area of the outer surface of the protruding portion is Q1, a surface area of the inner surface of the concave portion is Q2, and Q1 and Q2 satisfy: 1.02 ≤ Q1/Q2 ≤ 1.21; and/or, in the first direction, a surface area of an orthographic projection of the protruding portion on a plane where the first surface is located is S1, a surface area of an orthographic projection of the concave portion on a plane where the second surface is located is S2, and S1 and S2 satisfy: 1.02 ≤ S1/S2 ≤ 1.21.

In a possible implementation, in the first direction, a total projected area of all protruding portions on the first surface is S5, a total surface area of the first surface of the positive electrode plate is S, and S5 and S satisfy: 0.2 ≤ S5/S ≤ 0.95.

In a possible implementation, the positive electrode plate includes a plurality of protruding portion groups, and each group includes a plurality of the protruding portions; the two adjacent protruding portion groups are arranged at intervals in a second direction, and the second direction is a lengthwise extension direction of the positive electrode plate; the positive electrode plate includes a tab connection groove; in the second direction, the tab connection groove is located between the two adjacent protruding portion groups, and a shortest distance from a groove wall of the tab connection groove to the protruding portion of one of the two adjacent protruding portion groups is j; and J satisfies: 2 mm ≤ J ≤ 30 mm.

In a possible implementation,, the positive electrode plate includes a positive electrode current collector and positive electrode active layers that are stacked, and the positive electrode active layers are disposed on surfaces of the positive electrode current collector respectively in the first direction; and in a width direction of the positive electrode plate, the positive electrode active layer includes a first edge and a second edge that are opposite to each other, and a shortest distance between the protruding portion and the first edge or the second edge is M, and M satisfies: 0.5 mm ≤ M ≤ 30 mm; and/or
the positive electrode plate includes a winding head end and a winding tail end that are opposite to each other in a second direction, and the second direction is a lengthwise extension direction of the positive electrode plate; in the second direction, a minimum distance from the protruding portion which is closest to the winding head end to the winding head end is K1, and K 1 satisfies: 10 mm ≤ K1 ≤ 200 mm; and/or, in the second direction, a minimum distance from the protruding portion which is closest to the winding tail end to the winding tail end is K2, and K 2 satisfies: 5 mm ≤ K2 ≤ 200 mm.

In a second aspect, the embodiments of the present application provide a battery including the aforementioned jelly roll.

The embodiments of the present application provide a jelly roll and a battery. The jelly roll includes the positive electrode plate and the negative electrode plate. The positive electrode plate is provided with the plurality of protruding portions and straight portions located between adjacent protruding portions. The protruding portion is formed by a portion of the positive electrode plate protruding from the second surface toward the first surface. Firstly, the protruding portion is able to effectively support the separator, so that it is ensured that there is sufficient electrolyte solution storage space between the layers of the positive electrode plate and negative electrode plate, as well as between the positive electrode plate and the separator. Therefore, distribution of the electrolyte solution is improved, and a liquid retention capacity in these regions is increased, so that good infiltration effect is ensured. Consequently, the issues of electrolyte solution insufficiency and poor infiltration, which due to compression between the layers of the positive and negative electrode plates of the jelly roll that caused by the repeated expansion and contraction of silicon-doped negative electrode plates, is alleviated, thereby the issues of electrode interface deterioration, poor cycle stability of the negative electrode and reduced battery capacity retention rate are alleviated, and thus a battery capacity decay rate is reduced, and the cycle life of the battery cell is prolonged.

The protruding portion is provided on the positive electrode plate, so that the deformation capability of the positive electrode plate is improved. Therefore, when the positive electrode plate comes into contact with the expanded negative electrode plate, the protruding portion on the positive electrode plate is able to effectively absorb the expansion stress of the negative electrode plate to buffer the expansion of the negative electrode plate during a cycling process of the battery, and thus the negative electrode plate is prevented from developing cracks due to excessive expansion stress. Moreover, the protruding portion provided on the positive electrode plate is able to absorb a portion of the expansion stress of the negative electrode plate, so that the negative electrode plate does not entirely rely on the resistance of its own material during expansion, thereby delaying the fatigue of the negative electrode material, and thus the service life of the negative electrode plate is prolonged.

In addition, by ensuring that h and h1 satisfy 5% ≤ h₁/h ≤ 30%, a height of the protruding portion and a thickness of the positive electrode plate are adjusted within a reasonable range while ensuring the function of the protruding portion. Therefore, it is avoided that there is an excessive pressure which causes damage such as breakage or fracture of the positive electrode plate the when the protruding portion is formed on the positive electrode plate due to a thinner thickness of the positive electrode plate and a higher height of the protruding portion height. Furthermore, the effectiveness of the protruding portion in alleviating the expansion stress of the negative electrode plate and improving electrolyte wettability is not obvious because the positive electrode plate is too thick while the height of the protruding portion is too small, which will still result in poor interface of the layers of the electrode plates or excessive interlayer compressive stress, will be prevented.

Since the negative electrode active layer of the negative electrode plate includes a silicon-carbon composite material and/or a silicon-oxygen composite material, the silicon content will influence the degree of expansion of the negative electrode plate during charging and/discharging. The higher the silicon content in the negative electrode active layer, the greater the expansion of the negative electrode plate during charging and discharging, and the more severe the compression between the positive electrode plate and the negative electrode plate, and consequently, the higher the height of the protruding portion is required. It may be understood that, the higher the height of the protruding portion, the greater the stress-bearing surface of the protruding portion, and the stronger the deformation capability of the protruding portion, so that the expansion of the negative electrode plate may be more effectively alleviated, and thus the liquid storage space between the positive electrode plate and the negative electrode plate is ensured. Furthermore, since W1, H1, and H satisfy : 0.3 ≤ W1/(H1/H) ≤ 5, it is further ensured that the height of the protruding portion on the positive electrode plate is adjusted according to the change of the silicon content in the negative electrode active layer on the negative electrode plate under the condition that matches with the structure of the positive electrode plate, so that the height of the protruding portion is further able to be set more reasonably, thereby the protruding portion may not only ensure that there is enough liquid storage space between the electrode plates and the expansion stress of the negative electrode plate is effectively absorbed, but also prevent the energy density of the battery from being affected due to the increase of a thickness of the jelly roll caused by the excessively high height of the protruding portion of the positive electrode plate. Meanwhile, it is also avoided that the height of the protruding portion is too low to achieve an effect.

### BRIEF DESCRIPTION OF THE DRAWINGS

In order to more clearly illustrate technical solutions in embodiments of the present application or the conventional technologies, the drawings required to be used for describing the embodiments or the conventional technologies will be briefly introduced below. Apparently, the drawings in the following description are some embodiments of the present application. For those of ordinary skill in the art, other drawings may be obtained based on these drawings without creative effort.
FIG. 1 is a schematic structural diagram of a jelly roll according to an embodiment of the present application.
FIG. 2 is a schematic structural diagram of a positive electrode plate according to an embodiment of the present application.
FIG. 3 is a schematic structural diagram of a negative electrode plate according to an embodiment of the present application.
FIG. 4 is a schematic cross-sectional view of the positive electrode plate shown in FIG. 2 taken along a line A-A.
FIG. 5 is a schematic diagram showing the arrangement of protruding portions on a positive electrode plate according to an embodiment of the present application.
FIG. 6 is another schematic cross-sectional view of the positive electrode plate shown in FIG. 2 taken along the line A-A.
FIG. 7 is a schematic structural diagram of another positive electrode plate according to an embodiment of the present application.
FIG. 8 is a table showing variations of relevant performance parameters of a jelly roll with changes of parameters of protruding portions according to an embodiment of the present application.

Reference Numerals:
10- jelly roll; 20- positive electrode plate; 30- negative electrode plate; 40 - separator;
21- curved section; 22- straight section; 23- positive electrode current collector; 24- positive electrode active layer;
31- negative electrode active layer; 32- negative electrode current collector;
100- first surface;
110- winding head end; 120- winding tail end; 130- first edge; 140- second edge;
200- second surface;
300- protruding portion;
310- abutment portion; 320- supporting portion;
400- concave portion;
500- protruding portion group;
600- tab connection groove;
700- straight portion.

### DETAILED DESCRIPTION OF THE EMBODIMENTS

As described in the background section, in the related technologies, the silicon-based material faces the issue of volume expansion during charging and discharging. During charging and discharging, silicon and lithium undergo an alloying reaction, causing a volume of the silicon to expand by 100% to 300%. This repeated expansion and contraction will exacerbate the compression between the layers of the battery cell, so that there is insufficient electrolyte solution between the layers, thereby leading to poor infiltration, and thus resulting in rapid capacity degradation of the battery.

The root cause of this issue lies in that the repeated contraction and expansion will exacerbate the compression between the layers of the battery cell, so that the space between the layers is reduced, thereby resulting in insufficient electrolyte solution between the positive electrode plate and the negative electrode plate, and thus leading to poor infiltration. Therefore, it is easy to cause interface deterioration, so that the cycling stability and the capacity retention rate of the negative electrode plate are affected, and thus causing rapid capacity degradation of the battery.

Furthermore, the expansion will generate significant stress within the jelly roll, causing compression between the positive electrode plate, the negative electrode plate and the separator of the jelly roll. With repeated cycling, micro-cracks are easy to form and propagate on the negative electrode material in areas on the positive electrode plate and the negative electrode plate where the expansion stress is concentrated, so that there is a risk of breakage of the negative electrode plate, and thus the use safety of the battery is affected. This type of stress may also cause reduction of a porosity in the battery, so that migration channels of lithium ions are reduced, thereby leading to precipitation of lithium metal, and thus the safety of the battery is also affected.

In view of the above technical problem, an embodiment of the present application provides a jelly roll and a battery. The jelly roll includes a positive electrode plate and a negative electrode plate. The positive electrode plate is provided with a plurality of protruding portion and straight portions located between the adjacent protruding portions, and the protruding portion is formed by a portion of the positive electrode plate protruding from the second surface toward the first surface.

A maximum distance from a vertex of the protruding portion to a plane where the first surface is located is h1, in a first direction, a thickness of the straight portion on the positive electrode plate is h, and h and h1 satisfy: 5% ≤ h1/h ≤ 30%.

The negative electrode plate includes a negative electrode current collector and negative electrode active layers located on two side of the negative electrode current collector in the first direction respectively. The negative electrode active layer includes a silicon-carbon composite material and/or a silicon-oxygen composite material, a weight percentage content of a silicon element in the negative electrode active layer is W1, and W1, h1 and h satisfy: 0.3≤ W1/(h1/h) ≤ 5.

The protruding portion is able to effectively support the separator, so that it is ensured that there is sufficient electrolyte solution storage space between the layers of the positive electrode plate and the negative electrode plate, as well as between the positive electrode plate and the separator. Therefore, distribution of the electrolyte solution is improved, and a liquid retention capacity in these regions is increased, so that good infiltration effect is ensured. Consequently, the issues of electrolyte solution insufficiency and poor infiltration, which due to compression between the layers of the positive and negative electrode plates of the jelly roll that caused by the repeated expansion and contraction of silicon-doped negative electrode plates, is alleviated, thereby the issues of electrode interface deterioration, poor cycle stability of the negative electrode and reduced battery capacity retention rate are alleviated, therefore a battery capacity decay rate is reduced, and thus the cycle life of the battery cell is improved..

The protruding portion is provided on the positive electrode plate, so that the deformation capability of the positive electrode plate is improved. Therefore, when the positive electrode plate comes into contact with the expanded negative electrode plate, the protruding portion on the positive electrode plate is able to effectively absorb the expansion stress of the negative electrode plate to buffer the expansion of the negative electrode plate during a cycle process of the battery, and thus the negative electrode plate is prevented from developing cracks due to excessive expansion stress. Furthermore, the protruding portion on the positive electrode plate is able to absorb a portion t of the expansion stress of the negative electrode plate, so that the negative electrode plate does not entirely rely on the resistance of its own material during expansion, thereby delaying the fatigue of the negative electrode material, and thus the service life of the negative electrode plate is prolonged.

In addition, by ensuring that h and h1 satisfy 5% ≤ h1/h ≤ 30%, a height of the protruding portion and a thickness of the positive electrode plate are adjusted within a reasonable range while ensuring the function of the protruding portion. Therefore, it is avoided that there is an excessive pressure which causes damage such as breakage or fracture of the positive electrode plate the when the protruding portion is formed on the positive electrode plate due to a thinner thickness of the positive electrode plate and a higher height of the protruding portion. Furthermore, the effectiveness of the protruding portion in alleviating the expansion stress of the negative electrode plate and improving electrolyte wettability is not obvious because the positive electrode plate is too thick while the height protruding portion is too small, which will still result in poor interface of the layers of the electrode plates or excessive interlayer compressive stress, will be prevented.

Since the negative electrode active layer of the negative electrode plate includes a silicon-carbon composite material and/or a silicon-oxygen composite material, the silicon content will affect the degree of expansion of the negative electrode plate during charging and/discharging. The higher the silicon content in the negative electrode active layer, the greater the expansion of the negative electrode plate during charging and discharging, and the more severe the compression between the positive electrode plate and the negative electrode plate, and consequently, the higher the height of protruding portion is required. It may be understood that, the higher the height of the protruding portion, the greater the stress-bearing surface of the protruding portion, and the stronger the deformation capability of the protruding portion, so that the expansion of the negative electrode plate may be more effectively alleviated, and thus the liquid storage space between the positive electrode plate and the negative electrode plate is ensured. Furthermore, since W1, H1, and H satisfy: 0.3≤W1/(H1/H)≤5, it is further ensured that the height of the protruding portion on the positive electrode plate is adjusted according to the change of the silicon content in the negative electrode active layer on the negative electrode plate under the condition that matches with the structure of the positive electrode plate, so that the height of the protruding portion is further able to be set more reasonably, thereby the protruding portion may not only ensure that there is enough liquid storage space between the electrode plates and the expansion stress of the negative electrode plate is effectively absorbed, but also prevent the energy density of the battery from being affected due to the increase of a thickness of the jelly roll that caused by the excessively high height of the protruding portion of the positive electrode plate. Meanwhile, it is also avoided that the height of the protruding portion is too low to achieve an effect.

In order to make the aforementioned objectives, features, and advantages of the embodiments of the present application more obvious and readily understandable, the technical solutions of the embodiments of the present application will be described clearly and completely below with reference to the drawings. Apparently, the described embodiments are merely a portion of the embodiments of the present application's embodiments, rather than all the embodiments. Based on the embodiments of the present application, all other embodiments obtained by a person with ordinary skill in the art without creative work fall within the protective scope of the present application.

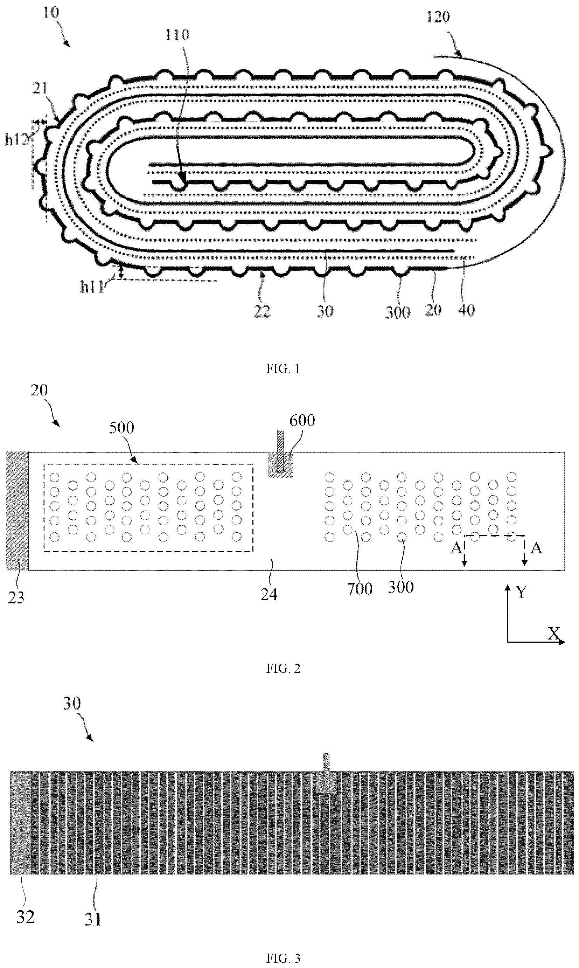

With reference to FIG. 1 to FIG. 4, an embodiment of the present application provides a jelly roll 10. The jelly roll 10 may include a positive electrode plate 20, a negative electrode plate 30, and a separator 40 disposed between the positive electrode plate 20 and the negative electrode plate 30. The positive electrode plate 20, the negative electrode plate 30, and the separator 40 are wound to form the jelly roll 10.

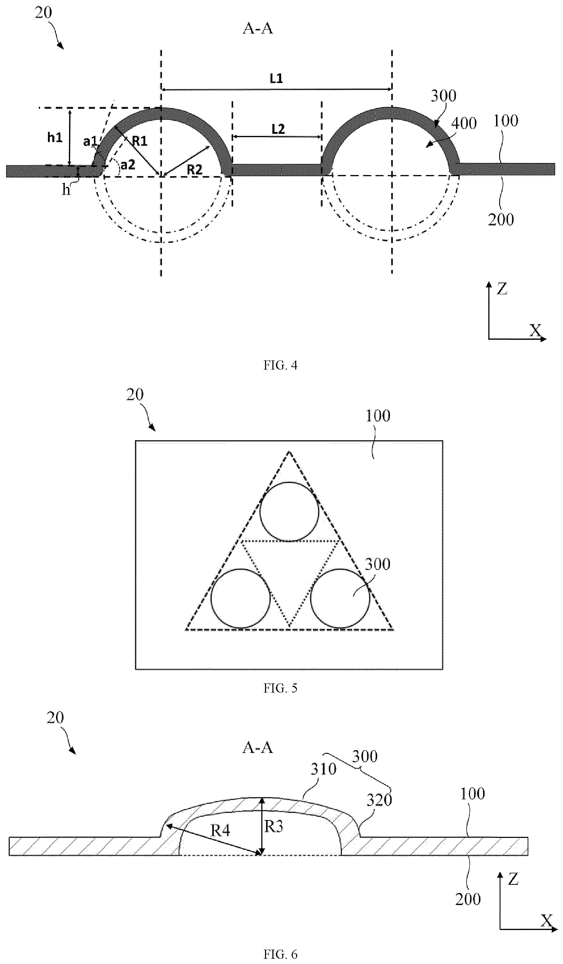

The positive electrode plate 20 may include a first surface 100 and a second surface 200 opposite to each other in a first direction (for example, the Z direction in FIG. 4). The positive electrode plate 20 is provided with a plurality of protruding portions 300 and straight portions 700 located between the adjacent protruding portions 300. The protruding portion 300 is formed by a portion of the positive electrode plate 20 protruding from the second surface 200 toward the first surface 100. The first direction may be a thickness direction of the positive electrode plate 20, and the first surface 100 and second surface 200 may be two opposite surfaces in the thickness direction of the positive electrode plate 20.

The embodiments of the present application provide a jelly roll 10. The jelly roll 10 includes a positive electrode plate 20 and a negative electrode plate 30. The positive electrode plate 20 is provided with a plurality of protruding portions 300 and straight portions 700 located between the adjacent protruding portions 300. The protruding portion 300 is formed by a portion of the positive electrode plate 20 protruding from a second surface 200 toward a first surface 100. The protruding portions 300 are able to effectively support the separator 40, so that it is ensured that there is sufficient electrolyte solution storage space between the layers of the positive electrode plate 20 and the negative electrode plate 30, as well as between the positive electrode plate 20 and the separator 40. Therefore, distribution of the electrolyte solution is improved, and a liquid retention capacity in these regions is increased, so that good infiltration effect is ensured. Consequently, the issues of electrolyte solution insufficiency and poor infiltration, which are caused by compression between the layers of the positive electrode plate 20 and negative electrode plate 30 of the jelly roll 10 due to the repeated expansion and contraction of silicon-doped negative electrode plates, is alleviated, thereby the issues of electrode interface deterioration, poor cycling stability of the negative electrode and reduced battery capacity retention rate are alleviated, therefore a battery capacity decay rate is reduced, and thus the cycle life of the battery cell is improved.

The protruding portion 300 is provided on the positive electrode plate 20, so that the deformation capability of the positive electrode plate 20 is improved. Therefore, when the positive electrode plate 20 comes into contact with the expanded negative electrode plate 30, the protruding portion 300 on the positive electrode plate 20 is able to effectively absorb the expansion stress of the negative electrode plate 30 to buffer the expansion of the negative electrode plate during a cycling process of the battery, and thus the negative electrode plate 30 is prevented from developing cracks due to excessive expansion stress. Furthermore, the protruding portion 300 on the positive electrode plate 20 is able to absorb a portion t of the expansion stress of the negative electrode plate 30, so that the negative electrode plate 30 does not entirely rely on the resistance of its own material during expansion, thereby delaying the fatigue of the negative electrode material, and thus the service life of the negative electrode plate 30 is prolonged.

In the first direction, a maximum distance from a vertex of the protruding portion 300 to a plane where the first surface 100 is located is h1 (as shown by h1 in FIG. 4). In the first direction, a region of the positive electrode plate 20 where the protruding portion 300 is not provided is the straight portion, and a thickness of the straight portion is h (as shown by h in FIG. 4).

The vertex of the protruding portion 300 abuts against the separator 40. It may be understood that, the vertex of the protruding portion 300 may be a region on the protruding portion 300 where the distance to the plane where the first surface 100 is located is substantially equal.

In some embodiments, h and h1 may satisfy: 5% ≤h1/h≤30%. For example, a ratio of h1 to h may be one of 5%, 7%, 10%, 12%, 18%, 20%, 21%, 23%, 26%, 27% and 29%. Alternatively, the ratio of h to h1 may be any value within the range of 5%≤h1/h≤30%.

In this way, by ensuring that h and h1 satisfy 5% ≤ h1/h ≤ 30%, a height of the protruding portion 300 and a thickness of the positive electrode plate 20 are adjusted within a reasonable range while ensuring the function of the protruding portion 300. Therefore, it is avoided that there is an excessive pressure which causes damage such as breakage or fracture of the positive electrode plate when the protruding portion 300 is formed on the positive electrode plate 20 due to a thinner thickness of the positive electrode plate 20 and a higher height of the protruding portion 300. Furthermore, the effectiveness of the protruding portion 300 in alleviating the expansion stress of the negative electrode plate and improving electrolyte wettability is not obvious because the positive electrode plate 20 is too thick while the height protruding portion 300 is too small, which will still result in poor interface of the layers of the electrode plates or excessive interlayer compressive stress, will be prevented.

With reference to FIG. 3, the negative electrode plate 30 may include negative electrode active layers 31 and a negative electrode current collector 32, and the negative electrode active layers 31 are disposed on two sides of the negative electrode current collector 32 in the first direction. The negative electrode active layer includes a silicon-carbon composite material and/or a silicon-oxygen composite material, and a weight percentage content of a silicon element in the negative electrode active layer 31 is W1. The greater the amount of silicon doping in the negative electrode active layer 31, the greater the expansion of the negative electrode plate 30 during the charging and discharging process of the battery. Consequently, there is a certain relationship between the height of the protruding portions 300 on the positive electrode plate 20 and the silicon content in the negative electrode active layer 31. For example, the greater the silicon content, the greater the corresponding height of the protruding portions 300 on the positive electrode plate 20 required to be. The higher the height of the protruding portions 300, the greater the stress-bearing surface of the protruding portions 300, so that deformation capability thereof is improved, and thus the expansion of the negative electrode plate is more effectively alleviated.

With reference to FIG. 4, in some embodiments, W1, h1 and h satisfy: 0.3 ≤ W1/(h1/h) ≤ 5. For example, the value of W1/(h1/h) may be selected from one of the following: 0.4, 0.7, 1.2, 1.5, 1.7, 2.4, 2.6, 2.9, 3.3, 3.5, 3.8, 4.1, 4.3, 4.6, or 4.9. Alternatively, W1/(h1/h) may be any value within a range that ranges from 0.3 to 5.

In this way, since W 1, H 1, and H satisfy : 0.3 ≤ W1/(H1/H) ≤ 5, it is further ensured that the height of the protruding portion 300 on the positive electrode plate 20 is adjusted according to the change of the silicon content in the negative electrode active layer 31 of the negative electrode plate 30 under the condition that matches with the structure of the positive electrode plate 20, so that the height of the protruding portion 300 is further able to be set more reasonably, thereby the protruding portion 300 may not only ensure that there is enough liquid storage space between the electrode plates and the expansion stress of the negative electrode plate 30 is effectively absorbed, but also prevent the energy density of the battery from being affected due to the increase of a thickness of the jelly roll 10 caused by the excessively high height of the protruding portion 300 of the positive electrode plate 20. Meanwhile, it is also avoided that the height of the protruding portion 300 is too low to achieve an effect.

With reference to FIG. 2 and FIG. 3, in some embodiments, the weight percentage content W1 of the silicon element in the negative electrode active layer 31 satisfies: 3 wt %≤W1≤50 wt %. For example, W1 may be one of 3 wt%, 5 wt%, 10 wt%, 12 wt%, 16 wt%, 19 wt%, 21 wt%, 24 wt%, 29 wt%, 33 wt%, 36 wt%, 41 wt%, 46 wt% and 49 wt%. Alternatively, W1 may be any value within the range that ranges from 3 wt% to 50 wt%.

In this way, excessive expansion of the negative electrode plate 30 due to an excessively high percentage content of the silicon is avoided, so that powder shedding or fracture of the negative electrode plate 30 is avoided. At the same time, the lithium intercalation capacity of the negative electrode material is prevented from being affected due to the weight percentage content of the silicon is too low is prevented, so that the energy density of the battery is prevented from being affected.

With reference to FIG. 4, in some embodiments, h1 satisfies: 3 µm ≤ h1 ≤50 µm. For example, h1 may be one of 3 µm, 3.7 µm, 5 µm, 9 µm, 10 µm, 12 µm, 23 µm, 34 µm, 36 µm, 40 µm, 43 µm, and 47 µm. Alternatively, h1 may be any value within the range that ranges from 3 µm to 50 µm.

In this way, it is possible to ensure that the protruding portions 300 provides sufficient liquid storage space and absorbs the expansion stress of negative electrode plate 30, and meanwhile, the positive electrode plate 20 is prevented from being easily to break during the formation of the protruding portion 300 due to the excessively high height of the protruding portions 300. Moreover, the problem that the expansion stress of the negative electrode plate 30 cannot be fully absorbed through deformation and enough liquid storage space cannot be provided because the height of the protruding portions 300 is too low is able to be solved.

In some embodiments, the negative electrode active layer 31 may include a silicon-carbon composite material and/or a silicon-oxygen composite material. The silicon-carbon composite material may include a porous carbon matrix, silicon grains located in pores of the porous carbon matrix and a carbon layer located on a surface of the porous carbon matrix. A material of the carbon layer may be crystalline carbon or amorphous carbon.

In some embodiments, the carbon layer may include openings disposed correspondingly to the pores of the porous carbon matrix.

In this way, by providing the openings corresponding to the pores of the porous carbon matrix on the carbon layer, the wettability of the electrolyte solution to the negative electrode active material is able to be improved, and meanwhile, the expansion of the silicon element is reduced, so that the cycle life of the battery cell is prolonged, and thus the service life of the battery is able to be prolonged.

In some embodiments, the material of the negative electrode active layer 31 may also include at least one of artificial graphite, natural graphite, mesocarbon microbeads, graphene, soft carbon, hard carbon, graphite material coated with soft carbon, and hard-carbon-coated graphite coated with hard carbon material.

In some embodiments, a specific surface area of the silicon-carbon composite material ranges from 0.5 m²/g to 10 m²/g. For example, the specific surface area of the silicon-carbon composite material may be 0.5 m²/g, 0.9 m²/g, 1.3 m²/g, 1.5 m²/g, 1.85 m²/g, 2.0 m²/g, 2.3 m²/g, 2.7 m²/g, 3.2 m²/g, 3.6 m²/g, 3.8 m²/g, 4.6 m²/g, 4.8 m²/g, 5.1 m²/g, 5.4 m²/g, 5.8 m²/g, 6.1 m²/g, 6.5 m²/g, 6.8 m²/g, 7.2 m²/g, 7.5 m²/g, 7.8 m²/g, 8.3 m²/g, 8.9 m²/g, 9.4 m²/g, or 9.9 m²/g. Alternatively, the specific surface area of the silicon-carbon composite material may be any value within the range that ranges from 0.5 m²/g to ≤ 10 m²/g.

In this way, by controlling the specific surface area of the silicon-carbon composite material, the solid electrolyte interface (SEI) film formed in the charging process is able to be reduced, thereby improving the cycling performance and the service life. The situation that a thickness of the SEI film is too small to effectively isolate the electrolyte solution from the negative electrode active layer 31due to the fact that the specific surface area is too small is able to be avoided. Moreover, it is possible to avoid that the SEI film is excessively thick due to an excessively large specific surface area, and thereby the influence of the excessively thick SEI film on the capacity and efficiency of the battery is able to be reduced.

In some embodiments, a Dv50 of the silicon-carbon composite material ranges from 6 µm to 15 µm. For example, the Dv50 may be 6 µm, 7 µm, 8 µm, 9 µm, 11 µm, 13 µm, or 14 µm. Alternatively, the Dv50 may be any value within the range that ranges from 6 µm to 15 µm.

In this way, by controlling the particle size of the silicon-carbon composite material within the above-mentioned range, it is able to be avoided that when the particle size is too small, it will easily cause the specific surface of the silicon particles to increase, and thereby promoting the side reaction. It is also possible to solve the problem that when the particle size is too large, it is easy to make the silicon particles excessively expand, thereby causing the pores of the porous carbon matrix to be blocked, and thus the infiltration effect of the electrolyte solution is affected.

An average sphericity of the silicon-carbon composite material ranges from 0.5 to 1. For example, the average sphericity may be selected from one of 0.6, 0.7, 0.8, or 0.9. Compared with non-spherical particles, the higher the sphericity, the closer the shape is to a sphere, therefore, during volume expansion, such particles have less impact on the structure of the negative electrode plate 30, and thus maintaining the overall structural stability of the negative electrode plate 30 during expansion.

Furthermore, the spherical particles may improve the mechanical strength and stability of the material, so that the stress concentration in the particles caused by the expansion is alleviated, and thus mechanical wear and potential damage risks during cycling are effectively reduced.

In some embodiments, a powder resistivity of the silicon-carbon composite material ranges from 0.1 Ω·cm to 1000 Ω·cm. For example, the powder resistivity may be 0.1 Ω·cm, 0.9 Ω·cm, 1.2 Ω·cm, 1.3 Ω·cm, 1.8 Ω·cm, 2.7 Ω·cm, 4.6 Ω·cm, 7.8 Ω·cm, 11 Ω·cm, 25 Ω·cm, 38 Ω·cm, 60 Ω·cm, 100 Ω·cm, 200 Ω·cm, 300 Ω·cm, 400 Ω·cm, 500 Ω·cm, 600 Ω·cm, 700 Ω·cm, 800 Ω·cm, 900 Ω·cm, or 1000 Ω·cm. Alternatively, the powder resistivity may be any value within the range that ranges from 0.1 Ω·cm to 1000 Ω·cm.

In some embodiments, the silicon content of the silicon-carbon composite material may range from 30 wt% to 75 wt%. For example, the silicon content may be 30 wt%, 35 wt%, 41 wt%, 45 wt%, 49 wt%, 51 wt%, 55 wt%, 59 wt%, 61 wt%, 64 wt%, 71 wt%, or 75 wt%. Alternatively, the silicon content may be any value within the range that ranges from 30 wt% to 75 wt%.

In this way, the excessively high silicon content in the negative electrode active layer 31, which will lead to excessive expansion of the negative electrode plate 30, and thus causes deformation of the overall structure of the silicon-carbon particles, is able to be avoided. Simultaneously, the silicon content is prevented from being too low that causes the energy density of the battery to reduce.

With reference to FIG. 1 and FIG. 2, in some embodiments, the positive electrode plate 20 may include a winding head end 110 and a winding tail end 120 which are opposite to each other in a longitudinal direction, and the plurality of protruding portions 300 are arranged at intervals in a direction from the winding head end 110 to the winding tail end 120.

A maximum distance from a vertex of the protruding portion 300 disposed close to the winding head end 110 to the plane where the first surface 100 is located is greater than a maximum distance from a vertex of the protruding portion 300 disposed close to the winding tail end 120 to the plane where the first surface 100 is located.

Storage locations of the electrolyte solution inside the battery cell are distributed in gaps between the jelly roll 10 and an aluminum-plastic film and gaps between the layers of the electrode plates. The interlayer storage primarily relies on pores of the electrode plates and a capillary effect for gradual infiltration, and compared to storage in the gap between the jelly roll 10 and the aluminum-plastic film, it needs a longer time has greater infiltration difficulty. Therefore, the amount of electrolyte solution stored in the inner electrode plates of the jelly roll 10 is significantly less than that in the outer electrode plates of the jelly roll 10. By increasing an embossing depth on the inner electrode plates, more liquid storage space is able to be provided. The depth of the protruding portions 300 on the outer layers is less than that of the protruding portions 300 on the inner layers, that is, the depth of the protruding portions 300 on the inner layers is higher, so that both the separator 40 and the negative electrode plate 30 are effectively supported. Micro-gaps in the inner layers that form between the protruding portions 300 and the separator 40 are greater, so that it is conducive to the storage of the electrolyte solution between inner electrode plates, thereby reducing the probability of lithium precipitation in the inner negative electrode plates 30, and thus the cycle life of the battery cell is prolonged.

With reference to FIG. 1, in some embodiments, from a winding center to an outermost side, the positive electrode plate 20 may include a plurality of curved sections 21 and a plurality of straight sections 22. In the direction from the winding head end 110 to the winding tail end 120, the plurality of straight sections 22 and the plurality of curved sections 21 are alternately arranged. Both the plurality of curved sections 21 and the plurality of straight section 22 are provided with the protruding portions 300.

A maximum distance from an outer surface of the protruding portion 300 on the straight section 22 to the first surface 100 is h11 (as shown by h11 in FIG. 1), a maximum distance from an outer surface of the protruding portion 300 on the curved section 21 to the first surface 100 is h12 (as shown by h12 in FIG. 1), and h11 and h12 satisfy: h11 < h12.

Due to the forces acting on the straight sections 22 and curved sections 21 are different in the jelly roll 10, the curved sections 21 are subjected to a greater bending stress, and after expansion, they are subjected to a more severe compressive stress, so that the negative electrode plate 30 in the curved sections 21 is more prone to breaking. Therefore, the protruding portions 300 with a greater height are required in the curved sections 21. By the protruding portions 300 absorb the expansion stress of the negative electrode plate 30, and thereby better buffering the stress in the curved sections 21 while ensuring a greater liquid storage space is provided. Therefore, the height of the protruding portions 300 disposed on the curved sections 21 is required to be greater than that of the protruding portions 300 on the straight sections 22.

With reference to FIG. 1, in some embodiments, h11 and h12 satisfy: 0.1≤h11/h12≤0.9. For example, a value of h11/h12 may be 0.2, 0.4, 0.5, 0.6, 0.7 or 0.8. Alternatively, it may take any value within the range that ranges from 0.1 to 0.9. With the above arrangement, it may be ensured that the protruding portion 300 effectively absorbs the expansion stress of the curved section 21 and provides a greater liquid storage space. Moreover, an overall width of the battery cell is excessively wide because the protruding portion 300 in the curved section 21 is too high is avoided, and meanwhile, it is avoided that the expansion stress of the curved section 21 is difficult to alleviate because the protruding portion 300 is too small.

In some examples, H11 may satisfy: 3 µm≤H11≤30 µm. For example, H11 may be one of 3.7 µm, 4.9 µm, 5.2 µm, 8 µm, 10 µm, 13 µm, 19 µm, 21 µm, 22 µm, 25 µm, and 29 µm.

In some examples, H 12 may satisfy: 5 µm≤H12≤50 µm. for example, H12 may be one of 5.2 µm, 8 µm, 10 µm, 13 µm, 19 µm, 21 µm, 22 µm, 25 µm, 29 µm, 31 µm, 33 µm, 37 µm, 41 µm, 43 µm, 46 µm, and 49 µm.

Referring to FIG. 4, in some embodiments, a region on the second surface 200 of the positive electrode plate 20 corresponding to the protruding portion 300 is a concave portion 400. In this way, a liquid storage space may be formed at the concave portion side and between the corresponding separator 40 and the negative electrode plate 30, so that the infiltration effect of the electrolyte solution is further improved, and the distribution of the electrolyte solution is improved, and thus the liquid storage capacity is increased.

In some embodiments, an outer surface of the protruding portion 300 is a first curved surface, and an inner surface of the concave portion 400 is a second curved surface. A curvature radius of the first curved surface is R1 (R1 in FIG. 4), a curvature radius of the second curved surface is R2 (R2 in FIG. 4), and R1 and R2 satisfy: R1 > R2. In this way, in a first direction, an orthographic projection of the first curved surface is greater than an orthographic projection of the second curved surface, so that a surface area of the outer surface of the protruding portion 300 is increased, thereby a contact area between the protruding portion 300 and the separator 40y is increased to increase a gap between the protruding portion side of the positive electrode plate 20 and the separator 40, and thus the liquid storage space is increased to improve the infiltration effect of the electrolyte solution.

Referring to FIG. 4, in some embodiments, the outer surface of the protruding portion 300 may be a hemispherical surface, and the inner surface of the concave portion 400 may be a hemispherical surface. By setting both the outer surface of the protruding portion 300 and the inner surface of the concave portion 400 to be hemispherical surfaces, it is convenient for processing the protruding portion 300 and concave portion 400. For example, the protruding portion 300 may be formed on the positive electrode plate 20 through a stamping process. After stamping, the portion protruding from the first surface 100 is the protruding portion 300, and the corresponding concave portion on the second surface 200 forms the concave portion 400.

Referring to FIG. 4, in some embodiments, a cross section of the concave portion 400 is a semicircle. A circumference of this semicircle may correspond to a circumference of the inner surface of the concave portion 400, the circumference of the inner surface may be denoted as C1, C1 may equal to πR², and C1 varies with changes of R2. C1 satisfies: 0.5π mm<C1<8π mm. For example, C1 may be selected from one of the following values: 0.6π mm, 1.6π mm, 2.5π mm, 2.8π mm, 3.1π mm, 3.7π mm, 4.6π mm, 5.8π mm, 6.3π mm, 6.7π mm, or 7.8π mm.

In this way, by limiting the circumference of the inner surface, an appropriate projected area of the protruding portion 300 may be achieved, so that the protruding portion 300 is prevented from being too large that causes loss of a volume energy density, or is prevented from being too small that results in insufficient deformation space for the positive electrode sheet 20, and thus failing to effectively buffer the expansion of the negative electrode sheet 30.

Referring to FIG. 4, in some embodiments, in a radial direction of the first curved surface, a distance between the vertex of the protruding portion 300 and a vertex of the concave portion 400 is less than or equal to a thickness of the straight portion 700 on the positive electrode plate 20.

That is, the thickness of the positive electrode plate 20 at the protruding portion 300 is reduced, so that the deformability of the protruding portion 300 is improved. This facilitates effective deformation of the protruding portion 300 when contacting the expanded negative electrode plate 30 during charge and discharge processed of the battery, so that it is able to perform effective deformation to absorb the expansion stress of the negative electrode plate 30.

In some embodiments, R1 satisfies: 0.5 mm≤R1≤8 mm. For example, R1 may be selected from 0.5 mm, 1.5 mm, 2.4 mm, 2.9 mm, 3.1 mm, 3.7 mm, 4.8 mm, 5.5 mm, 6.7 mm, 7.1 mm, or 7.5 mm. Alternatively, R1 may be any value within the range that ranges from0.5 mm to 8 mm.

In some embodiments, R2 satisfies: 0.5 mm≤R2≤8 mm. For example, R2 may be selected from 0.5 mm, 1.5 mm, 2.4 mm, 2.9 mm, 3.1 mm, 3.7 mm, 4.8 mm, 5.5 mm, 6.7 mm, 7.1 mm, or 7.5 mm. Alternatively, R2 may be any value within the range that ranges from0.5 mm to 8 mm.

In this way, by limiting the radius of the outer surface of the protruding portion 300 and the inner surface of the concave portion 400, the projection area of the protruding portion 300 in the first direction may be adjusted. When R1 or R2 is less than 0.5 mm, the projection area of the protruding portion 300 is too small, and the protruding portion 300 is too sharp. When it abuts against the separator 40, it is easy to damage the negative electrode plate 30 and the separator 40. Meanwhile, the deformation space of the positive electrode plate 20 is small, so that the effect of improving the expansion of the silicon-doped negative electrode is poor. When R1 or R2 is greater than 10 mm, the projection area of the protruding portion 300 is too large, so that during the manufacturing process, the protruding portion 300 is easy to deform excessively under the action of the extrusion force, the extension force, and the cyclic expansion force during formation, thereby the structure of the protruding portion 300 collapses, and thus the improvement effect on the expansion of the negative electrode plate 30 is poor.

In some embodiments, R1 and R2 satisfy: 1.01≤R1/R2≤1.1. For example, the value of R1/R2 may be selected from 1.02, 1.03, 1.04, 1.05, 1.06, or 1.09. Alternatively, R1/R2 may be any value within the range that ranges from 1.01 to 1.1.

With reference to FIG. 4 and FIG. 5, in some embodiments, in the first direction, outer tangent lines of orthographic projections of three the adjacent protruding portions 300 that are not on a same straight line form an external tangent triangle together, and an area of the external tangent triangle is S3. In the first direction, inner tangent lines of orthographic projections of three the adjacent protruding portion 300 that are not on the same straight line form an internal tangent triangle, and an area of the internal tangent triangle is S4. A distance (as shown by L1 in FIG. 4) between centers of orthographic projections of two the adjacent protruding portion 300 on a plane where the first surface 100 is located is L1. S3, S4, R1 and L1 satisfy: 3 πR1² ≤ S3-S4 ≤ 1.3L1².

In some embodiments, if the distances between the centers of the orthographic projections of every two adjacent protruding portion 300 to the plane where the first surface 100 is located are equal, both the external tangent triangle and the internal tangent triangle may be equilateral triangles.

In this way, by making 3πR1² ≤ (S3-S4) ≤ 1.3L1², a volume between the protruding portions 300 and a volume of the protruding portion 300 may be maintained within a reasonable range, so that the supporting force of the protruding portion 300 on the separator 40 and the deformability of the protruding portion 300 itself is able to be ensured.

Referring to FIG. 4, in some embodiments, when the outer surface of the protruding portion 300 is a hemispherical surface, h1 and a radius R1 of the hemispherical surface satisfy: 0.02≤h1/2R1≤0.1. For example, h1/2R1 may be selected from 0.03, 0.04, 0.05, 0.06, 0.07, 0.08, or 0.09.

In this way, by limiting the ratio of the height of the protruding portion 300 to the diameter of the outer surface of the protruding portion 300, the positive electrode plate 20 has an appropriate deformation space. This ensures that the protruding portion 300 has both sufficient supporting force and adequate deformation space while effectively alleviating the expansion of the silicon-based negative electrode.

With reference to FIG. 2, in some embodiments, in the first direction, a projection of the concave portion 400 on a plane where the second surface 200 is located may be circular, elliptical, or polygonal, and a projection of the protruding portion 300 on a plane where the first surface 100 is located may be circular, elliptical, or polygonal. The projections of the concave portions 400 and the protruding portion 300 may be the same shapes.

Referring to FIG. 4, in some embodiments, in the first direction, a distance between centers of orthographic projections of two the adjacent protruding portions 300 on a plane where the first surface 100 is located is L1 (as shown by L1 in FIG. 4). A shortest distance between the two adjacent protruding portions 300 is L2 L1 and L2 satisfy: 1.05≤L1/L2≤3. For example, L1/L2 may be one of 1.05, 1.07, 1.11, 1.14, 1.18, 2.07, 2.11, 2.5, 2.63, 2.76 and 2.94. Alternatively, L1/L2 may be any value within the range that ranges from 1.05 to 3.

In this way, by limiting the ratio L1/L2, a density of the protruding portions 300 may be controlled, so that sufficient supporting force for the positive electrode plate 20 is provided, and thus the positive electrode plate 20 is allowed to have adequate deformation space to alleviate the expansion of the silicon-based negative electrode. Each protruding portion 300 serves as a supporting point, and a plurality of supporting points may disperse the expansion stress of the negative electrode plate 30. Moreover, by setting the L1/L2 to range from 1.05 to 3, a contact area between the protruding portions 300 of the positive electrode plate 20 and the negative electrode plate 30 is effectively ensured, and thereby preventing local overheating due to an excessively small contact area.

Referring to FIG. 4, in some embodiments, L1 satisfies: 3 mm≤L1≤10 mm. For example, L1 may be selected from 3 mm, 3.5 mm, 4 mm, 4.7 mm, 5 mm, 5.2 mm, 6 mm, 6.7 mm, 7 mm, 7.7 mm, 8 mm, 8.6 mm, 9.2 mm, or 9.7 mm. Alternatively, L1 may be any value within the range that ranges from 3 mm to 10 mm.

In this way, by limiting the distance L1 between the centers of the two adjacent protruding portions 300, it is possible to ensure that the protruding portions 300 have an appropriate distance from each other, so that the protruding portions 300 is prevented from being too dense or too sparse, thereby an appropriate quantity of protruding portions 300 is ensured to regulate an appropriate volume of the protruding portions 300, therefore the expansion of the negative electrode plate 30 is effectively alleviated, and thus the infiltration effect of the electrolyte solution is improved.

When the distance between the protruding portions 300 is less than 2 mm, protruding points of a processing roller are too dense. During the process of forming the protruding portions 300 on the positive electrode plate 20, the extension of the electrode plate cannot meet the density requirement of the protruding portion 300, so that it is easy to result in the height of the protruding portion 300 also being insufficient, and thus causing insufficient deformation space for the positive electrode plate 20. Moreover, when the protruding portion 300 is excessively dense, the electrode plate is prone to breaking during the formation process of the protruding portion 300. When the distance between the protruding portions is greater than 10 mm, the protruding points of the processing roller are too sparse, so that the protruding portion 300 are excessively dispersed, thereby the supporting area of the protruding portions 300 is insufficient, and thus failing to improve the infiltration effect of the electrolyte solution.

In some embodiments, L2 satisfies: 0.5 mm≤L2≤8 mm. For example, L2 may be one of 0.7 mm, 0.9 mm, 1.2 mm, 1.7 mm, 2.5 mm, 2.8 mm, 3.1 mm, 3.5 mm, 4 mm, 4.7 mm, 5 mm, 5.2 mm, 6 mm, 6.7 mm, 7 mm, 7.7 mm, and 8 mm. Alternatively, L2 may be any value within the range that ranges from 0.5 mm to 8 mm.

Referring to FIG. 6, in some embodiments, the protruding portion 300 may include an abutment portion 310, and a surface of the abutment portion 310 facing the separator 40 is a third curved surface.

In this way, by defining the surface of the protruding portion 300 that contacts with the separator 40 as the third curved surface, the protruding portion 300 is able to be prevented from being excessively sharp, and thereby the risk that the protruding portion 300 pierces the separator 40, which will cause a short circuit, is avoided.

Referring to FIG. 6, in some embodiments, the protruding portion 300 may also include a supporting portion 320 located between the straight portion 700 of the positive electrode plate 20 and the abutment portion 310, and the supporting portion 320 is disposed around an outer periphery of the abutment portion 310. The supporting portion 320 may be a fourth curved surface, and a curvature of the third curved surface differs from that of the fourth curved surface.

Referring to FIG. 6, in some embodiments, when the outer surface of the supporting portion 320 is a fourth curved surface, a center of the fourth curved surface is located on a plane where the second surface 200 is located. In the first direction, a maximum distance from an outer surface of the abutment portion 310 to a plane where the second surface 200 (shown by R3 in FIG. 6) is located is R3, and a curvature radius of the fourth curved surface (shown by R4 in FIG. 6) is R4. R3 and R4 satisfy: R3<R4.

Referring to FIG. 6, in some embodiments, R3 and R4 satisfy: R3<1/5R4. For example, R3/R4 may be less than 1/5, 1/6, 1/7, 1/8, or 1/9. In this way, by limiting the height of the protruding portion 300 on the wound positive electrode plate 20, it is possible to ensure a proper gap between the positive electrode plate 20 and the separator 40, so that there is sufficient liquid storage space and the expansion stress of the negative electrode plate 30 is sufficient absorbed, and meanwhile, and thus the jelly roll 10 and the battery are prevented from being too thick.

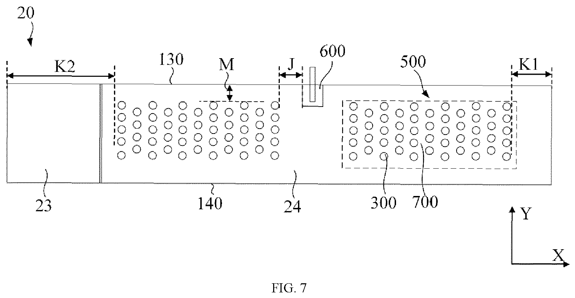

Referring to FIG. 4 and FIG. 7, in some embodiments, a surface area of the outer surface of the protruding portion 300 is Q1, a surface area of the inner surface of the concave portion 400 is Q2, and Q2 = 2πR2². Q1 and Q2 satisfy: 1.02≤Q1/Q2≤1.21. For example, Q1/Q2 may be one of 1.06, 1.09, 1.11, 1.13, 1.15, 1.17, or 1.19. Alternatively, Q1/Q2 may be any value within the range that ranges from 1.02 to 1.21.

In this way, Q1/Q2 ranges from 1.02 to 1.21, so that the volume of the protruding portion 300 is able to be better regulated, thereby the protruding portion 300 of the positive electrode plate 20 has an adequate deformation space, and thus the issue of the expansion of the negative electrode plate 30 is more effectively improved.

Referring to FIG. 7, in some embodiments, in the first direction, a surface area of an orthographic projection of the protruding portion 300 on a plane where the first surface 100 is located is S1, a surface area of an orthographic projection of the concave portion 400 on a plane where the second surface 200 is located is S2, and S1 and S2 satisfy: 1.02≤S1/S2≤1.21. For example, S1/S2 may be one of 1.06, 1.09, 1.11, 1.13, 1.15, 1.17, or 1.19. Alternatively, S1/S2 may be any value within the range that ranges from 1.02 to 1.21.

In this way, S1/S2 ranges from 1.02 to 1.21, the volume of the protruding portion 300 is able to be better regulated, so that the protruding portion 300 of the positive electrode plate 20 has an appropriate deformation space, and thereby the issue of the expansion of the negative electrode plate 30 is more effectively improved.

Referring to FIG. 4, in some embodiments, an outer surface of the protruding portion 300 is a first curved surface, and an inner surface of the concave portion 400 is a second curved surface. An included angle between a tangential direction at a connection position of the outer surface of the protruding portion 300 and the first surface 100 is α1 (shown by α1 in FIG. 4). α1 satisfies: 0°≤α1≤90°. For example, α1 may be one of 10°, 20°, 25°, 30°, 37°, 40°, 45°, 50°, 60°, 70°, 80°, or 85°. Alternatively, α1 may be any value within the range that ranges from 0° to 90°.

An included angle between a tangential direction at a connection position of the inner surface of the concave portion 400 and the second surface 200 is α2 (shown by α2 in FIG. 4). α2 satisfies: 0°≤α2≤90°. For example, α2 may be one of 10°, 20°, 25°, 30°, 37°, 40°, 45°, 50°, 60°, 70°, 80°, or 85°. Alternatively, α2 may be any value within the range that ranges from 0° to 90°.

Referring to FIG. 4, in some embodiments, α1 and α2 satisfy: 0° ≤ (α1-α2) ≤ 40°. For example, (α1-α2) may be one of 10°, 15°, 18°, 21°, 25°, 27°, 31°, 37°, or 40°. Alternatively, (α1-α2) may be any value within the range that ranges from 0° to 40°.

In this way, by making α1 be greater than or equal to 0° and less than or equal to 90°, it is possible to avoid the issue that because α1 is excessively large, during the process of forming the protruding portion 300, the connection position between the protruding portion 300 and the first surface 100 of the positive electrode plate 20 is prone to breaking. When α1 is too small, the inclination angle of the protruding portion 300 is too large, and the height of the protruding portion 300 is insufficient, so that the supporting force of the protruding portion 300 is insufficient, and thus the improvement effect on the expansion of the silicon negative electrode is poor.

By making α2 be greater than or equal to 0° and less than or equal to 90°, it is possible to avoid the issue that because α2 is excessively large, during the process of forming the protruding portion 300, the connection position between the concave portion 400 and the second surface 200 of the positive electrode plate 20 is prone to breaking. When α2 is too small, the inclination angle of the concave portion 400 is too small, and the height of the concave portion 400 is insufficient, thereby causing the supporting force of the protruding portion 300 to be insufficient, and thus resulting in poor improvement effect on the expansion of the silicon negative electrode.

Referring to FIG. 7, in some embodiments, in the first direction, a total area of orthographic projections of all the protruding portions 300 on the first surface 100 is S5, a surface area of the first surface 100 of the positive electrode plate 20 is S, and S5 and S satisfy: 0.2≤S5/S≤0.95. For example, S5/S may be one of 0.2, 0.3, 0.4, 0.5, 0.64, 0.7, 0.83, 0.87, and 0.93. Alternatively, S5/S may be any value within the range that ranges from 0.2 to 0.95.

In this way, if the protruding portion 300 occupies a relatively small area of the positive electrode plate 20, for example, S5/S is 0.1, then the area occupied by the protruding portion 300 would be too small, resulting in the protruding portion 300 being unable to absorb the expansion stress of the negative electrode plate 30, and being unable to provide sufficient electrolyte storage space. If the protruding portion 300 occupies a relatively large area of the positive electrode plate 20, for example, S5/S is 1, then the area proportion of the protruding portion 300 will be too large, causing the edge positions of the positive electrode plate 20 to be prone to damage, so that the quality of the positive electrode plate 20 in the jelly roll 10 is affected. Moreover, with such a high area proportion, the protruding portions 300 are relatively dense, and therefore, during the formation of the protruding portions 300, the pressure is relative concentration, so that leading to fracture of the electrode plate.

Referring to FIG. 7, in some embodiments, in the first direction, a surface area of a region on the first surface 100 of the positive electrode plate 20, excluding the protruding portions 300, is S6, and S5 and S6 satisfy: 0.8 ≤ S5/S6 ≤ 2. For example, S5/S6 may be one of 0.9, 1.1, 1.3, 1.4, 1.6, and 1.9. Alternatively, S5/S6 may be any value within the range that ranges from 0.8 to 2.

In this way, by limiting the density of the protruding portions 300, the protruding portions 300 are able to provide better support stability, and by making S5/S6 be greater than or equal to 0.8 and less than or equal to 2, the liquid storage capacity, wettability and absorption of the expansion stress of the negative electrode plate 30 are able to be more effectively improved.

Referring to FIG. 7, in some embodiments, the positive electrode plate 20 may include a plurality of protruding portion groups 500, and each protruding portion group 500 may include a plurality of the protruding portions 300. The adjacent two protruding portion groups 500 are arranged at intervals in a second direction (as shown by X in FIG. 7), where the second direction is a lengthwise extension direction of the positive electrode plate 20. The positive electrode plate 20 may include a tab connection groove 600, and in the second direction, the tab connection groove 600 is located between the two adjacent protruding portion groups 500.In the second direction, a shortest distance from a groove wall of the tab connection groove 600 to the protruding portion 300 of one of the two adjacent protruding portion groups 500 is J (as shown by J in FIG. 7), and J satisfies: 2mm≤J≤30 mm.

For example, J may be one of 3 mm, 4 mm, 6 mm, 9 mm, 12 mm, 15 mm, 19 mm, 21 mm, 25 mm, 27 mm and 29 mm. Alternatively, J may be any value within the range that ranges from 2 mm to 30 mm.

There is a straight region within the shortest distance from the protruding portion 300 to the tab connection groove 600, where no protruding portion 300 is provided, and thereby forming a void avoidance area in this region.

In this way, by setting the void avoidance area to be greater than or equal to 2 mm and less than or equal to 30 mm, it is possible to prevent the current collector at the position corresponding to the tab on the positive electrode plate 20 from being damaged due to rolling stress, and thereby avoiding affecting the welding stability of the tab and the interface uniformity at this location.

Referring to FIG. 7, in some embodiments, the positive electrode plate 20 may include a positive electrode current collector 23 and positive electrode active layers 24 that are stacked. The positive electrode active layers 24 are disposed on surfaces of the positive electrode current collector 23 respectively in the first direction. In a width direction of the positive electrode plate 20 (as the Y direction shown in FIG. 7), the positive electrode active layer 24 may include a first edge 130 and a second edge 140 that are opposite to each other. A shortest distance from the protruding portion 300 to either the first edge 130 or the second edge 140 is M (as M shown in FIG. 7), and M satisfies: 0.5 mm≤M≤30 mm. For example, M may be one of 0.6mm, 1.5 mm, 1.8 mm, 2.9 mm, 3 mm, 7 mm, 11 mm, 15 mm, 19 mm, 21 mm, and 25 mm. Alternatively, M may be any value within the range that ranges from 0.5 mm to 30 mm.

In this way, by making M be greater than or equal to 0.5 mm and less than or equal to 30 mm, it may be possible to prevent from edge curling and poor interface uniformity in the edge region of the positive electrode plate 20 caused by rolling stress are able to be effectively prevented, so that the cycling performance and service life of the battery cell are ensured.

Referring to FIG. 1 and FIG. 7, in some embodiments, the positive electrode plate 20 may include a winding head end 110 and a winding tail end 120 that are opposite to each other in a second direction (as the X direction shown in FIG. 7), where the second direction is a lengthwise extension direction of the positive electrode plate 20. In the second direction, a minimum distance from the protruding portion 300 which is closest to the winding head end 110 to the winding head end 110 is K1 (as K1 shown in FIG. 7). K1 satisfies: 10 mm≤K1≤200 mm. For example, K1 may be one of 20 mm, 30 mm, 40 mm, 60 mm, 80 mm, 100 mm, 110 mm, 120 mm, 130 mm, 150 mm, 160 mm, and 190 mm. Alternatively, K1 may be any value within the range that ranges from10 mm to 200 mm. In this way, a certain void avoidance area is formed between the protruding portion 300 at the winding head end 110 and the winding head end 110, where no protruding portion 300 is provided.

In this way, by making K1 be greater than or equal to 10 mm and less than or equal to 200 mm, it is possible to avoid the issues that the positive electrode plate 20 is folded during insertion and structural instability caused by the unstable insertion during winding.

In the second direction, a minimum distance from the protruding portion 300 which is closest to the winding tail end 120 to the winding tail end 120 is K2 (as K2 shown in FIG. 7). K2 satisfies: 5 mm≤K2≤200 mm. For example, K2 may be one of 5 mm, 10 mm, 20 mm, 30 mm, 40 mm, 60 mm, 80 mm, 100 mm, 110 mm, 120 mm, 130 mm, 150 mm, 160 mm and 190 mm. Alternatively, K2 may be any value within the range that ranges from 5 mm to 200 mm. In this way, a certain void avoidance area is formed between the protruding portion 300 the winding tail end 120 and the winding tail end 120, where no protruding portion 300 is provided.

The winding tail end 120 has a foil uncoating region. By making K2 be greater than or equal to 5 mm and less than or equal to 200 mm, it is possible to prevent the foil material from being damaged due to excessive rolling stress.

Referring to FIG. 3, in some embodiments, the negative electrode plate 30 is provided with grooves. A total volume of all the grooves on the negative electrode plate 30 is V1, a volume of the entire negative electrode active layer 31 is V2, and V1 and V2 satisfy: 1%≤V1/V2≤60%. For example, V1/V2 may be one of 2%, 7%, 10%, 20%, 31%, 38%, 40%, 50%, and 58%. A total area of all the grooves on the negative electrode plate 30 is S7, an area of the entire negative electrode active layer 31 is S8, and S7 and S8 satisfy: 1%≤S7/S8≤50%. For example, S7/S8 may be one of 2%, 7%, 10%, 20%, 31%, 38%, 40%, and 45%.

In this way, by providing the grooves on the negative electrode plate 30, the lithium intercalation kinetics of the negative electrode plate 30 is improved, so that the lithium intercalation tortuosity of the negative electrode plate 30 is reduced. Meanwhile, by providing the protruding portions 300 on the positive electrode plate 20, the battery is able to have better cycling performance.

In some embodiments, the grooves on the negative electrode plate 30 may be holes, such as cylindrical holes, conical holes or irregular holes. Alternatively, the grooves on the negative electrode plate 30 may also be slots, such as rectangular slots, trapezoidal slots or irregular slots.

Referring to FIG. 1 to FIG. 3, embodiments of the present application also provide a battery, which may include the aforementioned jelly roll 10. By using the aforementioned jelly roll 10, in the present application, a cycle life of the battery is improved, a decay rate of the battery is reduced, so that the performance of the battery is improved.

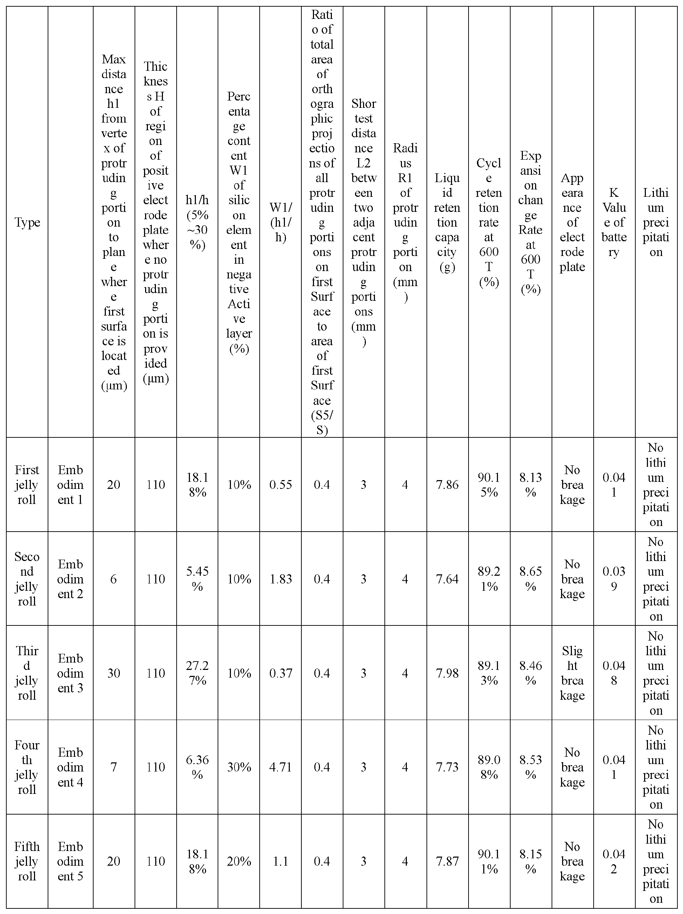

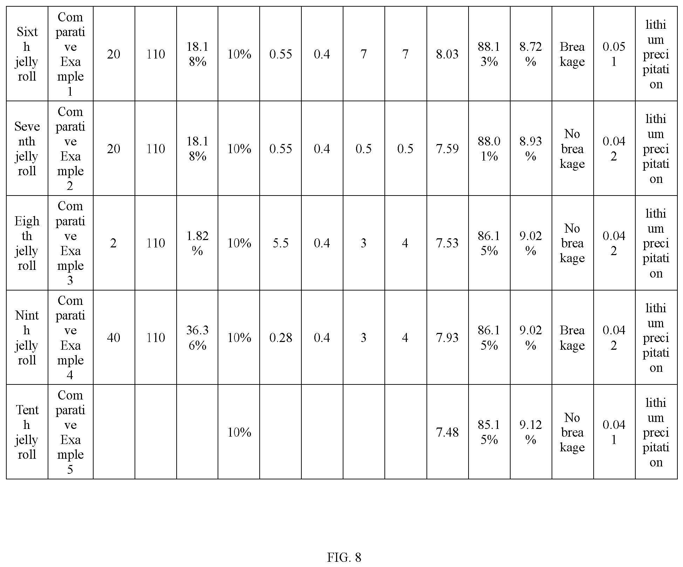

Referring to FIG. 1, according to the aforementioned parameter characteristics of the positive electrode plate and negative electrode plate, the positive electrode plate, the negative electrode plate and jelly roll were prepared, and the relevant performance parameters of the jelly roll were tested. The specific preparation process is shown as follows, and the relevant performances of each jelly roll are shown in FIG. 8.

### Embodiment 1

1. Preparation of positive electrode plate 20

Lithium cobalt oxide (LiCoO₂), conductive agent (a mixture of conductive carbon black and carbon nanotubes), and polyvinylidene fluoride (PVDF) were mixed in N-methyl-2-pyrrolidone (NMP) in a weight ratio of 97.60:1.35:1.05, and were stirred uniformly to prepare a positive electrode slurry.

The positive electrode slurry was uniformly coated on both sides of an aluminum foil, with a coating surface density of 0.01704 g/cm².

After processing by drying and rolling (a compaction density after rolling is 4.2 g/cm³) in sequence, a positive electrode plate 20 with a double-sided thickness h of 110 µm was obtained.

The slitted positive electrode plate 20 was processed with a special roller having protruding portions to form protruding portions 300. A height h1 of the protruding portion 300 is 20 µm, a space L2 between the adjacent protruding portions 300 is 3 mm, and a curvature radius R1 of the protruding portion 300 is 4 mm. A ratio S₅/S of a total orthographic projection area of all protruding portions on a first surface to a surface area of the first surface of the positive electrode plate is 0.4.

The detailed parameters of the prepared positive electrode plate are listed in Table 1.

### 2. Preparation of negative electrode plate 30

Silicon-containing artificial graphite, conductive carbon black, styrene-butadiene rubber (SBR), and sodium carboxymethyl cellulose (CMC-Na) were mixed in deionized water in a weight ratio of 97.2:0.5:1.3:1 to obtain a slurry, where a content W1 of a silicon content in the silicon-containing artificial graphite is 10 wt%.

The above-mentioned slurry was uniformly stirred to prepare the negative electrode slurry.

This negative electrode slurry was uniformly coated on the negative electrode current collector 32. After processing by drying, rolling, and slitting in sequence, the slitted negative electrode plate 30 was then performed laser etching to generate grooves over the entire surface of the negative electrode plate 30. Herein, the grooves are arranged in a matrix pattern, a space between the adjacent grooves is 1.2 mm, and a depth of the groove is 18 µm.

After laser treatment, the negative electrode plate 30 was cleaned and further processed to obtain the final negative electrode plate 30.

### 3. Preparation process of battery

A separator 40 includes a substrate coated with ceramic and adhesive, and has a thickness of 9 µm. The electrolyte solution includes lithium salt LiPF₆ and a solvent. The solvent includes ethylene carbonate (EC), diethyl carbonate (DEC) and ethyl methyl carbonate (EMC), with a molar ratio of DEC:EC:EMC = 1:1:1.

The slitted positive electrode plate 20, separator 40, and negative electrode plate 30 were sequentially stacked and wound into a battery cell with a jelly-roll structure. After the battery cell is performed processing of packaging, electrolyte injection, formation, and secondary sealing, a lithium-ion battery is obtained.

It may be understood that, the arrangement of the protruding portion on the positive electrode plate is mainly related to parameters such as the thickness of the positive electrode plate, the height of the protruding portion, and the weight percentage content of the silicon element in the negative electrode plate, and the like. By adjusting the weight percentage content of the silicon element in the negative electrode plate, the ratio relationship between the height of the protruding portion and the thickness of the positive electrode plate, and the coverage area of the protruding portion on the positive electrode plate, multiple positive electrode plates of different embodiments are obtained to perform performance tests.

### Embodiment 2

Compared with Embodiment 1, the maximum distance h1 from the vertex of the protruding portion 300 to the plane where the first surface 100 is located is 6 µm.

### Embodiment 3

Compared with Embodiment 1, the maximum distance h1 from the vertex of the protruding portion 300 to the plane where the first surface 100 is located is 30 µm.

### Embodiment 4

Compared with Embodiment 1, the maximum distance h1 from the vertex of the protruding portion 300 to the plane where the first surface 100 is located is 7 µm, and the weight percentage content W1 of the silicon element in the negative electrode active layer 31 is 30 wt%.

### Embodiment 5

Compared with Embodiment 1, the weight percentage content W1 of the silicon element in the negative electrode active layer 31 is 20 wt%.

### Embodiment 6

As comparative example 1, compared with Embodiment 1, the shortest distance L2 between two adjacent protruding portions 300 is 7 µm, and the radius R1 of the protruding portion 300 is 7 µm.

### Embodiment 7

As comparative example 2, the shortest distance L2 between two adjacent protruding portions 300 is 0.5 µm, and the radius R1 of the protruding portion 300 is 0.5 µm.

### Embodiment 8

As comparative example 3, compared with Embodiment 1, the maximum distance h1 from the vertex of the protruding portion 300 to the plane where the first surface 100 is located is 2 µm.

### Embodiment 9

As comparative example 4, compared with Embodiment 1, the maximum distance h1 from the vertex of the protruding portion 300 to the plane where the first surface 100 is located is 40 µm.

### Embodiment 10

As comparative example 5, compared with Embodiment 1, the positive electrode plate 20 in the comparative example 5 is not provided with the protruding portion 300.

### Testing Methods and steps for Relevant Parameters

1. Liquid Retention capacity: test Method: each battery is injected with a certain amount of electrolyte solution, for example, an injection amount n1 for each battery is 8.5 g ± 0.1 g. After injection, the batteries are aged, and then are performed the processes of formation, grading, and second sealing. During the second sealing, excess electrolyte solution is extracted, and the remaining amount of the electrolyte solution is defined as the liquid retention capacity n2, and n2 = m2 (Weight after second sealing) - m1 (Weight before electrolyte injection).

2. Visual Inspection of Positive electrode plate 20 after processing the protruding portion 300: test Method: the positive electrode plate 20 prepared with protruding portions 300 is observed by using a 3D microscope to assess surface integrity. The 3D microscope is employed to inspect whether there is any breakage on the electrode plate and measures a size of the breakage area.

3. Cycle Retention Rate and Expansion Rate Test: cycle test: the lithium ion battery was performed a cycle test in a Landian test chamber under the following test conditions: the temperature is 25°C ± 2°C, charging at 3.2 C to 4.37 V, charging at 2.8 C to 4.37 V, charging at 2 C to 4.53 V, and charging at 1.5 C to 4.58 V, then switching to constant voltage charging until a cutoff current of 0.05c; and discharging at 0.7 C to 3 V.

The specific method is as follows: the specific charging system is: standing at 25°C ± 2°C for 5 min, and discharging at 0.2 C to a lower voltage limit; and standing for 5 min, charging at 0.7 C to an upper voltage limit, then switching to constant voltage charging until a cutoff current of 0.025 C, then standing for 5 min, and discharging at 0.2 C to the lower limit voltage.

Initial capacity test: standing for 5 min, charging at 3.2 C to 4.37 V, charging at 2.8 C to 4.37 V, charging at 2 C to 4.53 V, charging at 1.5 C to 4.58 V, then switching to constant voltage charging until a cutoff current of 0.05 C; and measuring and recording data under fully charged state, including a voltage and a thickness.

Standing for 5 min at 25°C ± 2°C, discharging at 0.7 C to 3 V, standing for 5 min, charging at 3.2 C to 4.37 V, charging at 2.8 C to 4.37 V, charging at 2 C to 4.53 V, charging at 1.5 C to 4.58 V, and then switching to constant voltage charging until a cutoff current of 0.05 C; and standing for 5 min, discharging at 0.7 C to 3 V, standing for 5 min, repeat this process for 1200 times (T), and performing the capacity test mentioned above at 25°C every 100 times. Before 200 T, measuring the voltage and thickness of the fully charged battery cell every 50 T, and after 200 T, measuring the voltage and thickness of the fully charged battery cell every 200 T. The capacity retention rate and expansion rate of the lithium-ion battery are measured at 200 T and 400 T.

Battery expansion ratio = (thickness at fully charged state after the battery cell cycling for N times - initial thickness of the battery cell)/ initial thickness of the battery cell) × 100%.

It should be noted that, the above-mentioned standing is performed at a temperature of 25°C ± 2 °C.

### 4. Testing method of silicon content

The weight percentage content of the silicon element in the negative electrode active layer may tested by conventional methods in this field. For example, after discharging the battery to 0% SOC, the negative electrode plate is removed and immersed in dimethyl carbonate (DMC) solvent for 12 hours, then rinsed with the DMC solvent to remove the lithium salt attached to the negative electrode plate. Then the negative electrode active layer is soaked off from the negative electrode current collector with deionized water, and then the detached negative electrode active layer is dried and collected as a test sample.

The test is performed through a thermogravimetric analyzer (for example, TGA 550 thermogravimetric analyzer), and a weight of the test sample ranges from 5 mg to 15 mg. Under an air or oxygen atmosphere in the thermogravimetric analyzer, a temperature of the test sample is increased from the room temperature (25°C±5°C) to 900°C at a rate of 10°C/min, and then held at 900°C for 40 minutes to make non-silicon components in the negative electrode active layer to volatilize while the silicon element is fully oxidized to silicon dioxide. Then the residue material is the ash of the negative electrode active layer, and the weight percentage content of the silicon element in the negative electrode active layer is calculated based on a weight of the ash. The calculation formula is as follows: weight percentage content of silicon in the negative electrode active layer = 7 × the weight of the ash / (15 × the weight of test sample).

By testing the jelly roll 10 in the above ten embodiments, the liquid retention capacity, cycle retention rate at 600T, expansion rate at 600T, K value of the battery, and lithium precipitation status of ten jelly rolls 10 were obtained. The following information may be obtained from the table in FIG. 8.

Compared with the fifth jelly roll 10 in comparative example 5, which is not provided with the protruding portion 300 on the positive electrode plate 20, in Embodiment 1, the positive electrode plate 20 was prepared according to the relevant parameters of the protruding portion 300 in Embodiment 1, and the negative electrode plate 30 was prepared according to the weight percentage content of the silicon element in the negative electrode active layer 31 in Embodiment 1. The prepared positive electrode plate 20 and negative electrode plate 30 were processed to obtain the first jelly roll. Compared with the tenth jelly roll, the liquid retention capacity of the first jelly roll significantly increases, expansion rate of the first jelly roll significantly reduce, and there is no lithium precipitation in the first jelly roll. Therefore, by setting the protruding portion 300 on the positive electrode plate 20 of the jelly roll 10, the liquid storage performance and cycling service life of the jelly roll 10 are able to be effectively improved, and the issue of lithium precipitation is avoided, and thus the service safety of the battery is improved.

Compared Embodiment 2 with Embodiment 1, it may be seen that, under the condition of maintaining other parameters of the second jelly roll 10 unchanging, when the height of the protruding portion 300 is reduced, it will lead to the liquid retention capacity of the jelly roll 10 being reduced, so that the liquid storage performance of the jelly roll 10 is reduced, and the expansion rate of the jelly roll 10 is increased.

Compared Embodiment 3 with Embodiment 1, under the condition of maintaining other parameters of the third jelly roll 10 unchanging, when the height of the protruding portion 300 is increased, the liquid storage space between the positive electrode plate 20 and the negative electrode plate 30 is increased, so that the liquid retention capacity and expansion rate of the jelly roll 10 are increased, the cycle retention rate and K value of the battery are reduced, and furthermore, slight breakage is observed on the positive electrode plate 20. It may be seen that, when the height of the protruding portion 300 is increased while other parameters remain unchanged, although the liquid retention capacity is increased, there is a risk of breakage of the positive electrode plate 20.

Compared Embodiment 4 with Embodiment 1, when the height of the protruding portion 300 of the fourth jelly roll is reduced, and the weight percentage content of the silicon element in the negative electrode active layer 31 is increased, the liquid retention capacity is reduced, the cycle retention rate is reduced, and the expansion change rate is increased. This is because the protruding portion 300 with a lower height cannot provide sufficient liquid storage space between the positive electrode plate 20 and the negative electrode plate 30, so that the liquid storage capacity is reduced, and thereby affecting the cycle retention rate. Additionally, when the weight percentage content of the silicon element in the negative electrode active layer 31 is increased, it will result in the expansion of the negative electrode plate 30 being increased.

Compared Embodiment 5 with Embodiment 1, under the condition that other parameters of the fifth jelly roll are kept unchanging, merely the weight percentage content of the silicon element in the negative electrode active layer 31 is increase, the influence on the related performances is relatively small, and the performance parameters of the fifth jelly roll are essentially the same as those of the first jelly roll in Embodiment 1.

Compared Embodiment 6 with Embodiment 1, under the condition that other parameters of the sixth jelly roll 10 are kept unchanging, merely the shortest distance between the two adjacent protruding portions 300 and the radius of the protruding portion 300 are increased, so that the protruding portions 300 on the positive electrode plate 20 of the sixth jelly roll becomes sparse relative to the protruding portions 300 on the positive electrode plate 20 of the first jelly roll, so that for the sixth jelly roll 10, the liquid retention capacity, the expansion rate and the K value of the battery are increased, the cycle retention rate is reduced, and there is lithium precipitation in the sixth jelly roll. Therefore, if the protruding portion 300 is too sparse, it will cause the performance of the jelly roll 10 and the battery to be reduced, and thus the service safety of the battery is also affected.

Compared Embodiment 7 with Embodiment 1, when other parameters of the seventh jelly roll are kept unchanging, merely the shortest distance between the two adjacent protruding portions 300 and the radius of the protruding portion 300 are reduced, so that the protruding portions 300 on the positive electrode plate 20 of the seventh jelly roll becomes dense relative to the protruding portions 300 on the positive electrode plate 20 in the first jelly roll, and thus the liquid retention capacity, the expansion rate and the cycle retention rate of the seventh jelly roll are reduced, and there is lithium precipitation in the seventh jelly roll. Therefore, if the protruding portions 300 are too dense, it will also cause the performance of the jelly roll 10 and the battery to be reduced, and thus the service safety of the battery will also be affected.

Compared Embodiment 8 with Embodiment 1, under the condition that other parameters of the eighth jelly roll are kept unchanging, the maximum distance h1 from the vertex of the protruding portion 300 to the plane where the first surface 100 is located is significantly reduced to 2 µm. Due to the fact that the height of the protruding portion 300 is too low, the liquid retention capacity and the cycle retention rate of the eighth jelly roll are reduced, the expansion rate and the K value of the battery are increased, and there is lithium precipitation in the eighth jelly roll. Therefore, if the protruding portion 300 is too low, it will cause the performance of the jelly roll 10 and the battery to be reduced, and thus the service safety of the battery is also affected.

Compared Embodiment 9 with Embodiment 1, under the condition that other parameters of the ninth jelly roll 10 are kept unchanging, the maximum distance h1 from the vertex of the protruding portion 300 to the plane where the first surface 100 is located is significantly increased to 40 µm, so that for the ninth jelly roll, the liquid retention capacity, the expansion rate and K value of the battery are increased, while the cycle retention rate is significantly reduced. Additionally, there is breakage on the positive electrode plate 20, and there is lithium precipitation in the ninth jelly roll. Therefore, if the height of the protruding portion 300 is too high, it may also cause the performance of the jelly roll 10 and the battery is reduced, and thus the service safety of the battery is affected.

The embodiments or implementations in the present specification are described in a progressive manner, with each embodiment focusing on the differences from other embodiments. For the portions that are the same or similar among the embodiments, cross-reference may be made accordingly.

It should be noted that, expressions such as "in a specific implementation," "in some embodiments," "in the present embodiment," or "for example" used in the present specification indicate that the described embodiments may include particular features, structures, or characteristics, but not every embodiment necessarily includes such particular features, structures, and characteristics. In addition, such phrases do not necessarily refer to the same embodiment. When a particular feature, structure, or characteristic are described in combination with an embodiment, it is within the knowledge of a person skilled in the art to implement such feature, structure, or characteristic in combination with other embodiments, whether explicitly or implicitly described.

Generally, terms should be interpreted at least partially based on their usage in context. For instance, depending at least on the context, the term "one or more" as used herein may be used for describing any feature, structure, or characteristic in a singular sense, or may be used for describing a combination of features, structures, characteristics in a plural sense. Similarly, terms such as "a" or "the" may also be interpreted, at least partially based on context, as transmitting either a singular or plural usage.

It should be easily understood that, the terms "on," "over," and "above" in the present disclosure should be interpreted in their broadest possible sense. This means that "on" not only implies "directly on something", but also includes the meaning of "on something" with an intermediate feature or layer therebetween. Similarly, "over" or "above" not only includes the meaning of "over or above something", but may also include the meaning of "over above something" without any intermediate feature or layer therebetween (that is, direct on something).

Additionally, spatially relative terms such as "below", "under", "lower", "above", "upper" and the like, may be used for ease of description to describe a relationship between an element or feature and another element or feature as shown in the drawings. The spatially relative terms are intended to include different orientations of a device during use or operation, in addition to the orientation depicted in the drawings. The device may have other orientations (rotated 90 degrees or in other orientations), and the spatially relative descriptors used herein should be interpreted accordingly.

Finally, it should be noted that: the above embodiments are used merely for illustrating the technical solutions of the present application, and are not intended to limit them. Although the present application has been described in detail with reference to the foregoing embodiments, those of ordinary skilled in the art should understand that they may still modify the technical solutions described in the foregoing embodiments, or equivalently substitute some or all of the technical features. Such modifications or substitutions do not cause the essence of the corresponding technical solutions to depart from the scope of the technical solutions in the embodiments of the present application.

## Claims

1. A jelly roll, comprising a positive electrode plate, a negative electrode plate and a separator located between the positive electrode plate and the negative electrode plate, the positive electrode plate, the separator and the negative electrode plate being wound to form the jelly roll;
the positive electrode plate comprising a first surface and a second surface opposite to each other in a first direction, the positive electrode plate being provided with a plurality of protruding portions and straight portions located between the adjacent protruding portions, and the protruding portion being formed by a portion of the positive electrode plate protruding from the second surface toward the first surface;
a maximum distance from a vertex of the protruding portion to a plane where the first surface is located being h1, in the first direction, a thickness of the straight portion on the positive electrode plate being h, and h and h1 satisfying: 5% ≤h1/h ≤ 30%; and
the negative electrode plate comprising a negative electrode current collector and negative electrode active layers located on two side of the negative electrode current collector in the first direction respectively, the negative electrode active layer comprising a silicon-carbon composite material and/or a silicon-oxygen composite material, a weight percentage content of a silicon element in the negative electrode active layer being W1, and W1, h1 and h satisfying: 0.3 ≤ W1/(h1/h) ≤ 5.

2. The jelly roll according to claim 1, wherein,
W1 satisfies: 3 wt% ≤ W1 ≤ 50 wt%, and/or
h1 satisfies: 3 µm ≤ h1 ≤ 50 µm.

3. The jelly roll according to claim 1 or claim 2, wherein the positive electrode plate comprises a winding head end and a winding tail end opposite to each other in a length direction of the positive electrode plate;
the plurality of protruding portions are arranged at intervals in a direction from the winding head end to the winding tail end; and
a maximum distance from a vertex of the protruding portion disposed close to the winding head end to the plane where the first surface is located is greater than a maximum distance from a vertex of the protruding portion disposed close to the winding tail end to the plane where the first surface is located.

4. The jelly roll according to claim 3, wherein the positive electrode plate comprises a plurality of curved sections and a plurality of straight sections;
in the direction from the winding head end to the winding tail end, the plurality of straight sections and the plurality of curved sections are alternately arranged;
both the plurality of curved sections and the plurality of straight sections are provided with the protruding portions;
a maximum distance from an outer surface of the protruding portion on the straight section to the first surface is h11;
a maximum distance from an outer surface of the protruding portion on the curved section to the first surface is h12; and h11 and the h12 satisfy: h11 < h12.

5. The jelly roll according to claim 4, wherein h11 and h12 satisfy: 0.1 ≤ h11/h12 ≤ 0.9; and/or
h11 satisfies: 3 µm ≤ h11 ≤ 30 µm; and/or
h12 satisfies: 5 µm ≤ h12 ≤ 50 µm.

6. The jelly roll according to any one of claims 1 to 5, wherein a region on the second surface of the positive electrode plate corresponding to the protruding portion is a concave portion;
an outer surface of the protruding portion is a first curved surface, and an inner surface of the concave portion is a second curved surface;
a curvature radius of the first curved surface is R1, and a curvature radius of the second curved surface is R2; and
R1 and R2 satisfy: R1 > R2.

7. The jelly roll according to claim 6, wherein in a radial direction of the first curved surface, a distance between the vertex of the protruding portion and a vertex of the concave portion is less than or equal to a thickness of the straight portion on the positive electrode plate,
R1 satisfies: 0.5 mm ≤ R1 ≤ 8 mm; and/or
R2 satisfies: 0.5 mm ≤ R2 ≤ 8 mm; and/or
R1 and R2 satisfy: 1.01 ≤ R1/R2 ≤ 1.1.

8. The jelly roll according to claim 6 or claim 7, wherein in the first direction, outer tangent lines of orthographic projections of three the adjacent protruding portions that are not on a same straight line form an external tangent triangle together, and an area of the external tangent triangle is S3;
in the first direction, inner tangent lines of orthographic projections of the three adjacent protruding portions that are not on the same straight line form an internal tangent triangle, and an area of the internal tangent triangle is S4;
a distance between centers of orthographic projections of two the adjacent protruding portions on a plane where the first surface is located is L1; and
S3, S4, R1 and L1 satisfy: 3πR1² ≤ S3-S4 ≤ 1.3L1².

9. The jelly roll according to any one of claims 6 to 8, wherein h1 and the curvature radius R1 of the first curved surface satisfy: 0.02 ≤ h1/2R1 ≤ 0.1.

10. The jelly roll according to any one of claims 6 to 9, wherein in the first direction, a distance between centers of orthographic projections of two the adjacent protruding portions on a plane where the first surface is located is L1;
a shortest distance between the two adjacent protruding portions is L2;
L1 and L2 satisfy: 1.05 ≤ L1/L2 ≤ 3; and/or
L1 satisfies: 3 mm ≤ L1 ≤ 10 mm; and/or
L2 satisfies: 0.5 mm ≤ L2 ≤ 8 mm.

11. The jelly roll according to any one of claims 6 to 10, wherein a surface area of the outer surface of the protruding portion is Q1, and a surface area of the inner surface of the concave portion is Q2;
Q1 and Q2 satisfy: 1.02 ≤ Q1/Q2 ≤ 1.21, and/or, in the first direction, a surface area of an orthographic projection of the protruding portion on a plane where the first surface is located is S1, a surface area of an orthographic projection of the concave portion on a plane where the second surface is located is S2, and S1 and S2 satisfy: 1.02 ≤ S1/S2 ≤ 1.21.

12. The jelly roll according to any one of claims 1 to 11, wherein in the first direction, a total area of orthographic projections of the plurality of protruding portions on the first surface is S5, a surface area of the first surface of the positive electrode plate is S, and S5 and S satisfy: 0.2 ≤ S5/S ≤ 0.95.

13. The jelly roll according to any one of claims 1 to12, wherein the positive electrode plate comprises a plurality of protruding portion groups, and each protruding portion group comprises a plurality of the protruding portions;
the adjacent two protruding portion groups are arranged at intervals in a second direction, and the second direction is a lengthwise extension direction of the positive electrode plate;
the positive electrode plate comprises a tab connection groove; and
in the second direction, the tab connection groove is located between the adjacent two protruding portion groups, a shortest distance from a groove wall of the tab connection groove to the protruding portions of one of the two adjacent protruding portion groups is J, and J satisfies: 2 mm ≤ J ≤ 30 mm.

14. The jelly roll according to any one of claims 1 to 13, wherein the positive electrode plate comprises a positive electrode current collector and positive electrode active layers that are stacked;
the positive electrode active layers are disposed on surfaces of the positive electrode current collector respectively in the first direction;
in a width direction of the positive electrode plate, the positive electrode active layer comprises a first edge and a second edge that are opposite to each other, a shortest distance from the protruding portion to either the first edge or second edge is M, and M satisfies: 0.5 mm ≤ M ≤ 30 mm; and the positive electrode plate comprises a winding head end and a winding tail end that are opposite to each other in a second direction, and the second direction is a lengthwise extension direction of the positive electrode plate;
in the second direction, a minimum distance from the protruding portion which is closest to the winding head end to the winding head end is K1, and K1 satisfies: 10 mm ≤ K1 ≤ 200 mm; and/or
in the second direction, a minimum distance from the protruding portion which is closest to the winding tail end to the winding tail end is K2, and K2 satisfies: 5 mm ≤ K2 ≤ 200 mm.

15. A battery comprising the jelly roll according to any one of claims 1 to 14.
